# EUROPEAN PATENT APPLICATION

(11) **EP 2 500 808 A1**
(43) Date of publication of application: **19.09.2012**
(21) Application number: 11167221.8
(22) Date of filing: 24.05.2011
(51) Int. Cl.: G06F 3/048

(54) **Electronic device, control method of the same, and computer program product of the same**

(30) Priority: 15.03.2011 TW 100108829
(71) Applicant: HTC Corporation, Taoyuan County 330 (TW)
(72) Inventor: Kao, Yih-Feng, 330, Taoyuan City, Taoyuan County (TW)
(74) Representative: 2K Patentanwälte Blasberg Kewitz & Reichel

(57) **Abstract**

An electronic device, a control method, and a computer program produce of the same are provided. The electronic device includes a touch panel and a display panel. The display panel is controlled to display a software input panel (SIP). The SIP includes a number of software keys. Each software key is corresponding to a touch region of the touch panel. The control method includes a number of steps. A touch input for a software key is received. According to the software key, one or more candidate software keys are identified. One of the candidate software keys has its corresponding touch region being enlarged. A layout of the SIP is kept substantially unchanged.

## Description

### Technical Field

The disclosure relates in general to applications of a software input panel (SIP), and more particularly to an electronic device providing the SIP, a control method and a computer program product thereof.

### Background

With the blooming development of technique made in touch sensing, there is an increasing number of electronic devices replacing a conventional display screen and a physical keyboard with a touch screen, which is served as an interface for both displaying images and receiving input from users. Based on the technique of touch sensing, a software input panel (SIP) is developed such that users can directly input texts or symbols to an electronic device via the touch screen.

However, since handheld electronic devices trend to be light, slim, short, and small, the employed touch screen is usually required to have a limited size, resulting in an increased difficulty in operating SIP. In other words, when the touch screen of a handheld electronic device is miniaturized, the displayed SIP will become too small to allow software keys (or keypads) on the SIP to be properly touched by users. In view of these miniaturized keys, it is possible that users are caused or forced to provide erroneous touch input, and unexpected results will be generated. As a result, the convenience of operating the electronic device will be reduced.

There is provided a conventional approach, in which the arrangement of the SIP is changed or modified such that keys which users expect to use can be touched with higher possibility. This approach to changing the arrangement of SIP, however, reduces convenience of operating the SIP. More specifically, when the arrangement such as the location or position of software keys is changed after a touch input is received, users are required to examine again the new arrangement of software keys, as well as discover his or her expected key thereafter. Users repeat these required operations every time after they provide a touch input. Therefore, this approach reduces operational convenience for users, causes users to have difficulty in adapting themselves to using the SIP, and reduces input efficiency.

### BRIEF SUMMARY

Examples are disclosed for an electronic device, a control method and a computer program product, in which the convenience of operating the electronic device can be increased.

The disclosure provides a control method. The control method is for use in an electronic device which includes a touch panel and a display panel. The display panel is configured to display a software input panel (SIP), and the SIP includes a number of software keys each corresponding to a touch region on the touch panel. The control method includes a number of steps. A touch input for a software key is received. According to the software key, one or more candidate software keys are identified. A touch region corresponding to a candidate software key of the one or more candidate software keys is enlarged. A layout of the SIP is kept substantially unchanged.

The disclosure further provides an electronic device. The electronic device includes a display panel, a touch panel, and a process module. The display panel is configured to display an SIP. The SIP includes a number of software keys. The touch panel is covered on the display panel. Each of the software keys corresponds to a touch region on the touch panel. The process module is configured to receive a touch input for a software key. The process module is further configured to identify, according to the software key, one or more candidate software keys. The process module is further configured to enlarge a touch region corresponding to a candidate software key of the one or more candidate software keys. The process module is further configured to keep a layout of the SIP substantially unchanged.

The disclosure further provides a computer program product. The computer program product is embodied in a computer readable storage medium having computer program code, that when executed by a processor, causes the processor to perform the aforementioned control method.

It is to be understood that both the foregoing general description and the following detailed description are exemplary and explanatory only and are not restrictive of the disclosed examples, as claimed.

### BRIEF DESCRIPTION OF THE DRAWINGS

FIG. 1 is a block diagram showing an electronic device according to an example of the disclosure.

FIG. 2 is a flow chart showing a control method according to an example of the disclosure.

FIG. 3 is a schematic diagram showing an example of a software input panel (SIP) displayed on the electronic device according to an example of the disclosure, wherein the SIP is in its initial condition.

FIG. 4 is a schematic diagram showing an example of the SIP displayed on the electronic device according to an example of the disclosure, wherein a portion of touch regions are enlarged.

FIG. 5 is a schematic diagram showing another example of the SIP displayed on the electronic device according to an example of the disclosure, wherein a portion of touch regions are enlarged.

### DETAILED DESCRIPTION OF THE DISCLOSURE

Reference will now be made in detail to examples of the present disclosure. The examples are demonstrated and made as examples only, and are not limited to the particular examples made. Examples of the examples are illustrated in the accompanying drawings, wherein like reference numerals refer to like elements throughout, and secondary elements are omitted in the examples disclosed below for highlighting the technical features of the disclosure.

According to an electronic device, a control method and a computer program product disclosed in examples, in response to user's operation, the electronic device can predict which key is likely to be subsequently touched by the user, and change, e.g., enlarge, a touch region corresponding to that key, so that the touch possibility of that key is increased. In addition, the electronic device can keep a layout of that key substantially unchanged, so as to prevent displayed images or frames from being changed frequently. In this way, erroneous touch input resulted from miniaturized keys can be improved, and the convenience of operating the electronic device can be increased.

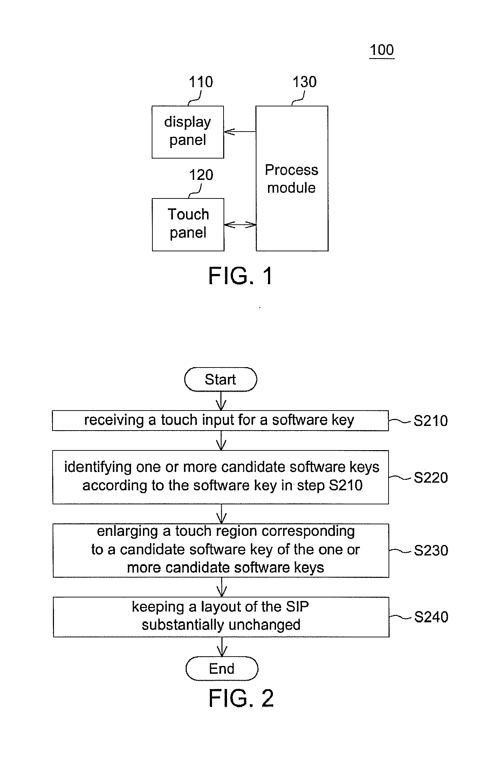

FIG. 1 is a block diagram showing an electronic device according to an example of the disclosure. The electronic device 100 includes a display panel 110, a touch panel 120, and a process module 130. The display panel 110 is configured to display various kinds of information. The touch panel 120 can be one of various kinds of touch panel in terms of its sensing means or mechanism, such as resistive, capacitive, optical, surface acoustic wave (SAW) type touch panels. The touch panel 120 is covered on the display panel 110, such that a display region corresponds to a touch region. The process module 130 is configured to perform or execute various kinds of threads or processes. The process module 130 is for example implemented by a micro-processor chip, or other processor having the ability to perform arithmetic operations or computations. The process module 130 is configured to control the touch panel 120 to receive or detect touch input, and control the display panel 110 to display information accordingly.

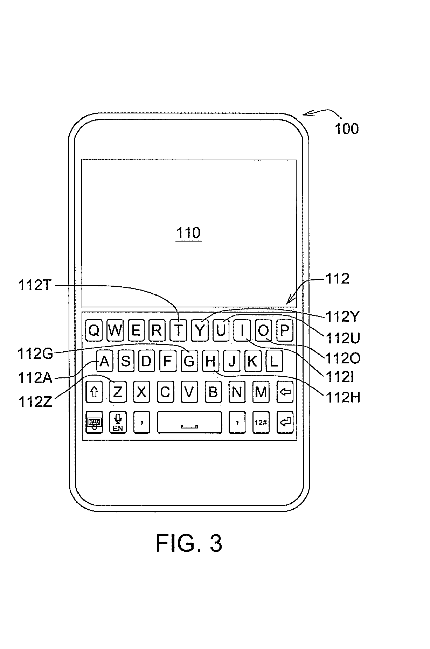

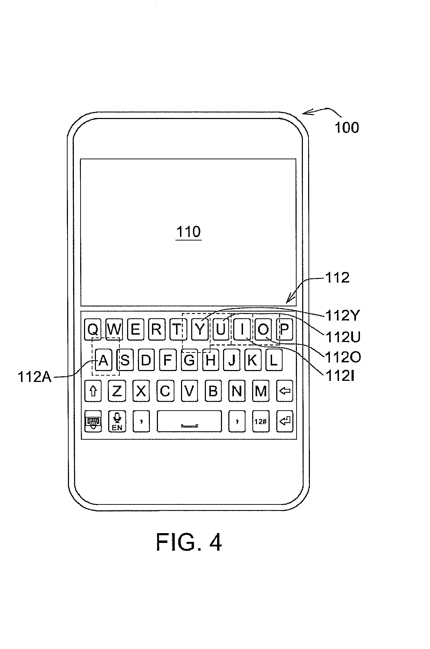

Refer to FIG. 2, FIG.3 and FIG.4. FIG. 2 is a flow chart showing a control method according to an example of the disclosure. FIG. 3 is a schematic diagram showing an example of a software input panel (SIP) displayed on the electronic device according to an example of the disclosure, wherein the SIP is in its initial condition. FIG. 4 is a schematic diagram showing an example of the SIP displayed on the electronic device according to an example of the disclosure, wherein a portion of touch regions are enlarged. The following description of the control method is made with reference to the accompanying drawings of FIGS. 3 and 4.

In step S210, the electronic device 100 receives a touch input for a software key. The electronic device 100 displays an SIP 112 on its display panel 110. The SIP 112 includes a number of software keys, an initial state of which is shown in FIG. 3.

Each of the software keys corresponds to a display region on the display panel 110. In a display region corresponding to a software key, various kinds of pattern are displayed, and one of which is produced or input when the corresponding software key is touched. The patterns are for example alphabetical characters, punctuation signs, numerical numbers, labels, or other text symbols. In this example, the SIP 112 is arrayed according to a typical or standard "QWERTY" arrangement, but this disclosure is not limited thereto.

Each of the software keys, further, corresponds to a touch region on the touch panel 120. In practice, touch location of the touch panel 120 can be calibrated properly through physical or software calibration means, so that each software key can have a touch region within a substantially same range as that of a display region. In the initial condition of FIG. 3, every software key of the SIP 112 has a touch region and a display region which are sustainably the same as each other. As such, users are allowed to provide touch input according to the visual feedback of these displayed software keys.

In step S220, the electronic device 100 identifies one or more candidate software keys according to the software key in step S210. For example, when the electronic device 100 receives a touch input for a software key 112Z, the electronic device 100 identifies or predicts, according to the software key 112Z, one or more candidate software keys which are likely to be touched after the software key 112Z.

In an example, the electronic device 100 identifies one or more software keys which are likely to be subsequently touched according to a usage history. For example, as regards a word "zyxel" that is input by a user previously, when receiving a touch input for the software key 112Z to input a character "z", the electronic device 100 searches the usage history for words, phrases or character strings which are input previously and would logically be possible starting from the character "z", such as the word "zyxel" in usage history. As such, the corresponding software key 112Y of the character "y" is then identified as a candidate software key which is likely to be touched after the character "z".

In another example, the electronic device 100 identifies one or more software keys which are likely to be subsequently touched according to a dictionary database. For example, when receiving a touch input for the software key 112Z to input a character "z", the electronic device 100 searches the dictionary database for words, phrases, or character strings which would logically be possible starting from the character of "z", such as the word "zag". "zoo", "zip", or "zune" in dictionary database. As such, the corresponding software key 112A, 1120, 1121, or 112U of the character "a", "o", "i", and "u" can then be identified as a candidate software key which is likely to be touched after the character "z".

In another example, the electronic device 100 identifies one or more software keys which are likely to be subsequently touched according to a usage history and a dictionary database. For example, when receiving a touch input for the software key 112Z to input a character "z", the electronic device 100 identify the corresponding software key 112Y, 112A, 1120, 1121, and 112U of the character "y", "a", "o", "i", and "u" as candidate software keys which are likely to be touched after the character "z".

In step S230, the electronic device 100 enlarges a touch region corresponding to a candidate software key of the one or more candidate software keys of step S220. In the example of FIG. 4, the electronic device 100 enlarges the touch regions of the software keys 112Y, 112A, 1120, 1121, and 112U, which are likely to be touched, enlargement results of which are shown in dashed lines.

In an example, enlargement scale of a touch region can be based on a number of rules, examples of which are provided as follows.

### 1. To check adjacent touch regions for candidate software keys

In an example, the electronic device 100 can check whether an adjacent software key of a candidate software key belongs to the one or more candidate software keys. The electronic device 100, then, determines how to enlarge the candidate software key according to the checked results.

For example, as regards the candidate software key 112Y, there are a number of adjacent software keys 112T, 112U, 112G, and 112H located at its borders or surrounds. According to the checked results, it can be found that the software key 112T does not belong to a candidate software key. At this time, the electronic device 100 can enlarge the touch region corresponding to the candidate software key 112Y towards the touch region corresponding to its adjacent software key 112T. For example, the electronic device 100 extends the touch region corresponding to the candidate software key 112Y as far inside as the touch region corresponding to its adjacent software key 112T, and reduces the touch region corresponding to the software key 112T accordingly. The software keys 112G and 112H are checked in a similar manner to that for the software key 112T. Moreover, according to the checked results, it can be found that the adjacent software key 112U belongs to a candidate software key. At this time, the electronic device 100 can keep the touch region corresponding to the candidate software key 112Y unchanged, or not enlarged towards its adjacent software key 112U. In this way, the touch regions corresponding to the software keys can be avoided being excessively moved away from its initial position on the SIP.

### 2. To check adjacent candidate software keys for their priority values

In an example, the electronic device 100 assigns each candidate software key one priority value which is indicative of the touch possibility of that key.

For example, as regards a character "y" which is found in the usage history, its touch region corresponding to the software key 112Y is assigned a highest, first priority value, such as 1, indicative of a highest touch possibility. Moreover, as regards characters "a", "o", "i", "u" which are found in the dictionary database, their touch regions corresponding to the software keys 112A, 1120, 1121, 112U are assigned a second-highest, second priority value, such as 2, indicative of a second-highest touch possibility. As regards other touch regions, they are assigned a third priority value, such as 3, indicative of a relatively lower touch possibility. Three priority values are exemplified in this example, but hits disclosure is not limited thereto.

In this example, the electronic device 100 can determine the size of each of touch regions according to their priority values.

For example, as regards two candidate software keys which are adjacent to each other, the electronic device 100 compares the priority values of the two candidate software keys with each other, and determines the size of the touch regions of the two candidate software keys according to the compared results. As regards two candidate software keys 112Y and 112U, the first priority value of the candidate software key 112Y is higher than the second priority value of the candidate software key 112U. As such, the electronic device 100 enlarges the touch region corresponding to the candidate software key 112Y towards the touch region corresponding to the candidate software key 112U. As regards two candidate software keys 112U and 112l, the priority value of the candidate software key 112U is equal to the priority value of the candidate software key 112l. As such, the electronic device 100 keeps the touch regions corresponding to the candidate software keys 112U and 1121 unchanged.

### 3. To determine the enlargement scale of the touch region according to the number of the candidate software keys

In an example, the enlargement scale of the touch region corresponding to the candidate software key is relative to the number of the candidate software keys.

With user's operation, a word is close to its completion when the number of input characteristics is increased. At this time, a decreased number of keys which are identified as candidate software keys can be expected, as well as a higher accuracy of predicted results. Moreover, with respect to the arrangement of keyboard or SIP, the possibility that there are two candidate software keys which are adjacent to each other is also reduced in this situation. At this time, the touch region can be enlarged to a greater extent that the touch possibility can be further increased.

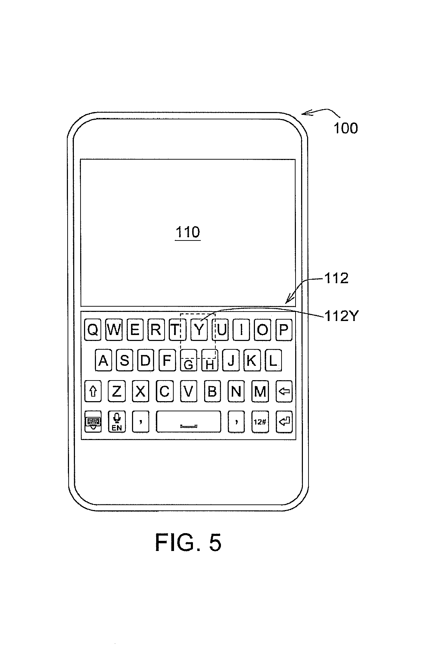

Refer to both FIGS. 4 and 5. FIG. 5 is a schematic diagram showing another example of the SIP displayed on the electronic device according to an example of the disclosure, wherein a portion of touch regions are enlarged. As compared with the five candidate software keys 112Y, 112A, 112O, 112l, 112U in the example of FIG. 4, it is assumed that there is a single candidate software key 112Y in the example of FIG. 5. As such, the touch region of the candidate software key 112Y has a higher enlargement scale, which is shown in dashed line.

### 4. To learn from feedback

In an example, the enlargement scale of the touch region corresponding to the candidate software key is relative to the number of the occurrence of erroneous touch event.

In certain situations, although the identified candidate software keys can meet user's needs, it is possible that user's operation still trigger erroneous touch events, such as an event that a user provides erroneous touch input when unintentionally touching unwanted software keys. If erroneous touch events occur frequently, it means that the user has difficulty in providing correct touch input for his or her wanted information, resulting in reduced operational convenience. In view of these situations, in an example, when the number or times of the occurrence of the erroneous touch events increases, the enlargement scale of the touch regions is increased for the prevention of erroneous touch events and for the enhancement of operational convenience.

In aforementioned examples, a portion of software keys have their touch regions changed, while their changes are not excessive since they are under the aforementioned exemplary rules, and are regulated to an proper and appropriate extent. Applicants found that when software keys have their touch regions changed excessively, some of these touch regions may be moved away from their initial positions on the SIP to an undue extent, which causes users to have difficulty in adapting themselves to using the SIP, and reduces operational convenience. In view of the aforementioned four rules, when a portion of software keys have their touch regions changed, each of the touch regions can be remained at its central position, or most of the touch regions can be remained unchanged. In this way, the examples allow users to adapt themselves to using the SIP, provide users with higher touch possibility for their expected keys, and increase user experience.

In step S240, the electronic device 100 can keep a layout of the SIP substantially unchanged. In an example, the electronic device 100 can keep a shape, a size, and a location of the candidate software key substantially unchanged, so as to prevent displayed images or frames from being changed frequently and excessively, and increase operational convenience for users.

In another example, as to the software keys of the SIP, the electronic device 100 can change their background's color or brightness, or character's color, brightness or fonts, so that users can conveniently distinguish or recognize, or distinguish from others, the candidate software keys. In this way, visual feedback of the candidate software keys can be enhanced, and operational convenience for users can be increased.

Refer to FIG. 4. When a subsequent touch input is received while its touch location is outside the corresponding display region of the software key 112Y, the software key 112Y, conventionally, is not determined as being touched or depressed. However, as can be seen from FIG. 4, when a subsequent touch input is received while its touch location is outside the corresponding display region of the software key 112Y, but inside its corresponding touch region, the software key 112Y is determined as being touched or depressed. Besides, when a subsequent touch input is received while its touch location is inside the corresponding display region of the software key 112T, the software key 112Y, conventionally, is not determined as being touched or depressed. However, as can be seen from FIG. 4, when a subsequent touch input is received while its touch location is inside the corresponding display region of the software key 112T, but still inside the corresponding touch region of the software key 112Y, the software key 112Y is determined as being touched or depressed. It can be acknowledged that, in the example of FIG. 4, the software key 112Y has a higher touch possibility, which is desired by users.

In aforementioned examples, the usage history can be established or updated according to users' operation, an example of which is made as follows. A word "apple" is the one which usually can be found in a dictionary. In a case that user's touch input is for a word (e.g. the word "abble") which is self-defined by the user and would not be found in dictionaries, when the word is input completely (e.g., the word's composed characters are sequentially input, and a space character subsequently), the electronic device 100 will stores this word "abble" therein and includes it in the usage history for future reference in prediction, so as to increase operational convenience for users.

Based on aforementioned description, several examples related to the assignment of priority values are disclosed, where the word found in the usage history is relative to the assignment of a first priority value, and the word found in the dictionary database is relative to the assignment of a second priority value, and the word found neither in the usage history nor the dictionary database is relative to the assignment of a third priority value. This disclosure, however, is not limited to aforementioned examples, and there are also other examples. Among them, there is another example where the word found in both the usage history and the dictionary database is relative to the assignment of a highest priority value, the word found only in the usage history is relative to the assignment of a second highest priority value, and the word found only in the dictionary database is relative to the assignment of a third highest priority value. There is another example, where the word can be classified or defined as one of recently used words or frequently used words which are relative to assignment of different priority values. It will be appreciated by those skilled in the art that changes could be made to the disclosed examples described above for the implementation of priority value assignment.

In addition to using the usage history and dictionary database to identify or predict keys, in order to search for words which would be possibly used by users, the electronic device 100 can make use of stored information in its internal memory or external memory, e.g., contacts' information such as a contact's English name, Chinese name, or identification, which are for example stored in an electronic address book. Moreover, in order to search for words, the electronic device 100 can make use of proper nouns, terms, professional glossaries, e.g., company names, or product names, which are for example stored in electronic documents or files, calendar schedules, or messages. Moreover, in order to search for words, the electronic device 100 can, via communication networks, search internet for words which are for example enumerated by the list of trending queries. These examples are provided for illustration, and this disclosure is not limited thereto.

Beside, the disclosure further discloses examples of a computer program product. The computer program product can be embodied in a computer readable storage medium having computer program code, that when executed by a processor, causes the processor to perform the control method described above for use in electronic devices.

According to the electronic device, the control method and the computer program product disclosed in the aforementioned exemplary examples, in response to user's operation, the electronic device can predict which key is likely to be subsequently touched by the user, and change, e.g., enlarge, a touch region corresponding to that key. In this way, the predicted key has increased touch possibility, and users have higher chance to successfully touch or depress that key. In this way, erroneous touch input resulted from miniaturized keys can be improved, unexpected results can be avoided, and the convenience of operating the electronic device can be increased.

It will be appreciated by those skilled in the art that changes could be made to the disclosed examples described above without departing from the broad inventive concept thereof. It is understood, therefore, that the disclosed examples are not limited to the particular examples disclosed, but is intended to cover modifications within the spirit and scope of the disclosed examples as defined by the claims that follow.

## Claims

**1.** A control method for use in an electronic device, the electronic device comprising a touch panel and a display panel, the display panel being configured to display a software input panel (SIP), the SIP comprising a plurality of software keys each corresponding to a touch region on the touch panel, the control method comprising:
receiving a touch input for a software key;
identifying, according to the software key, one or more candidate software keys;
enlarging a touch region corresponding to a candidate software key of the one or more candidate software keys; and
keeping a layout of the SIP substantially unchanged.

**2.** The control method according to claim 1, further comprising:
checking whether an adjacent software key of the candidate software key belongs to the one ore more candidate software keys;
wherein the step of enlarging the corresponding touch region of the candidate software key comprises:
enlarging, when the adjacent software key is checked not belonging to the one or more candidate software keys, the touch region corresponding to the candidate software key towards a touch region corresponding to the adjacent software key.

**3.** The control method according to claim 2, further comprising:
keeping, when the adjacent software key is checked belonging to the one or more candidate software keys, the touch region corresponding to the candidate software key unchanged.

**4.** The control method according to claim 2, further comprising:
assigning each candidate software key one priority value;
comparing, when the adjacent software key is checked belonging to the one or more candidate software keys, a priority value of the candidate software key with a priority value of the adjacent software key; and
keeping, when the priority value of candidate software key is equal to the priority value of the adjacent software key, the touch region corresponding to the candidate software key unchanged;
wherein the step of enlarging the touch region corresponding to the candidate software key further comprises:
enlarging, when the priority value of candidate software key is higher than the priority value of the adjacent software key, the touch region corresponding to the candidate software key towards the touch region corresponding to the adjacent software key.

**5.** The control method according to claim 4, wherein the step of assigning each candidate software key one priority value comprises:
assigning each candidate soft key one priority value according to at least one of a usage history and a dictionary database.

**6.** The control method according to claim 2, wherein the enlargement scale of the touch region of the candidate software key is relative to the number of the one or more candidate software keys.

**7.** The control method according to claim 2, wherein the enlargement scale of the touch region of the candidate software key is relative to the number of the occurrence of erroneous touch event.

**9.** An electronic device, comprising:
a display panel configured to display a software input panel (SIP), the SIP comprising a plurality of software keys;
a touch panel covered on the display panel, wherein each of the software keys corresponds to a touch region on the touch panel; and
a process module configured to receive a touch input for a software key, the process module further configured to identify, according to the software key, one or more candidate software keys, the process module further configured to enlarge a touch region corresponding to a candidate software key of the one or more candidate software keys, the process module further configured to keep a layout of the SIP substantially unchanged.

**10.** The electronic device according to claim 9, wherein the process module checks whether an adjacent software key of the candidate software key belongs to the one or more candidate software keys, and enlarges the touch region corresponding to the candidate software key towards a touch region corresponding to the adjacent software key when the adjacent software key is checked not belonging to the one or more candidate software keys.

**11.** The electronic device according to claim 10, wherein the process module further keeps the touch region corresponding to the candidate software key unchanged when the adjacent software key is checked belonging to the one or more candidate software keys.

**12.** The electronic device according to claim 10, wherein the process module is further configured to assign each candidate software key one priority value,
the process module is further configured to compare the priority value of the candidate software key with the priority value of the adjacent software key when the adjacent software key is checked belonging to the one or more candidate software keys,
the process module is further configured to keep the touch region corresponding to the candidate software key unchanged when the priority value of candidate software key is equal to the priority value of the adjacent software key, and
the process module is further configured to enlarge the touch region corresponding to the candidate software key towards the touch region corresponding to the adjacent software key when the priority value of candidate software key is higher than the priority value of the adjacent software key.

**13.** The electronic device according to claim 12, wherein the process module assigns each candidate software key one priority value according to at least one of a usage history and a dictionary database.

**14.** The electronic device according to claim 10, wherein the enlargement scale of the touch region corresponding to the candidate software key is relative to the number of the one or more candidate software keys.

**15.** The electronic device according to claim 10, wherein the enlargement scale of the touch region corresponding to the candidate software key is relative to the number of the occurrence of erroneous touch event.

**17.** A computer program product embodied in a computer readable storage medium having computer program code, that when executed by a processor in an electronic device, causes the processor to perform operations of any of claims 1-7.
